# EUROPEAN PATENT SPECIFICATION

(11) **EP 4 335 231 B1**
(45) Date of publication and mention of the grant of the patent: **21.01.2026**
(21) Application number: 21724649.5
(22) Date of filing: 07.05.2021
(51) Int. Cl.: H04W 76/15, H04W 84/12, H04W 88/06, H04W 88/10

(54) **METHODS AND APPARATUSES FOR CONFIGURING A MULTI-LINK WIRELESS LOCAL AREA NETWORK CONNECTION BETWEEN A WIRELESS DEVICE AND A FIRST WIRELESS LOCAL AREA NETWORK TERMINATION NODE**
VERFAHREN UND VORRICHTUNGEN ZUM KONFIGURIEREN EINER DRAHTLOSEN LOKALEN NETZWERKVERBINDUNG MIT MEHREREN VERBINDUNGEN ZWISCHEN EINER DRAHTLOSEN VORRICHTUNG UND EINEM ERSTEN LOKALEN NETZWERKABSCHLUSSKNOTEN
PROCÉDÉS ET APPAREILS POUR CONFIGURER UNE CONNEXION DE RÉSEAU LOCAL SANS FIL À LIAISONS MULTIPLES ENTRE UN DISPOSITIF SANS FIL ET UN PREMIER NOEUD DE TERMINAISON DE RÉSEAU LOCAL SANS FIL

(43) Date of publication of application: 13.03.2024
(73) Proprietor: Telefonaktiebolaget LM Ericsson (publ), 164 83 Stockholm (SE)
(72) Inventor: SEDIN, Jonas, Brentford Greater London TW8 0SU (GB); DI TARANTO, Rocco, 223 59 Lund (SE)
(74) Representative: Ericsson
(86) International application number: PCT/EP2021/062141
(87) International publication number: WO 2022/233427

(56) References cited:
- EP-A1- 3 528 530
- WO-A1-2014/175882
- WO-A1-2017/129283
- WO-A1-2021/011476
- US-A1- 2020 221 534
- US-A1- 2021 045 175
- INSUN JANG (LG ELECTRONICS): "Discussion on Multi-link Setup", vol. 802.11 EHT; 802.11be, no. 5, 14 November 2019 (2019-11-14), pages 1 - 13, XP068164746, Retrieved from the Internet <URL:https://mentor.ieee.org/802.11/dcn/19/11-19-1509-05-00be-discussion-on-multi-link-setup.pptx> [retrieved on 20191114]
- JONAS SEDIN (ERICSSON): "Radio Measurement procedures for Multi-link devices", vol. 802.11 EHT; 802.11be, 19 January 2021 (2021-01-19), pages 1 - 14, XP068175884, Retrieved from the Internet <URL:https://mentor.ieee.org/802.11/dcn/21/11-21-0125-00-00be-radio-measurement-procedures-for-multi-link-devices.pptx> [retrieved on 20210119]

## Description

### Technical Field

Embodiments described herein relate to methods and apparatuses for configuring a multi-link Wireless Local Area Network (WLAN) connection between a wireless device and a first WLAN termination node. In particular, embodiments described herein provide the cellular network with the ability to completely or partially control the establishment and reporting of a multi-link to the WLAN in a Radio Access Network (RAN) interworking scenario.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Recently, the 802.11be task group has begun the development of an enhancement of the IEEE 802.11 standard called Extremely High Throughput (EHT). With this new amendment, new features will be introduced. One of these features is multi-link (ML). The purpose of multi-link is to enable a device to operate and send data on multiple channels simultaneously or semi-simultaneously, depending on its capability to transmit and receive simultaneously. This feature aims to enable aggregation of bandwidth as well as lower latency through faster channel access.

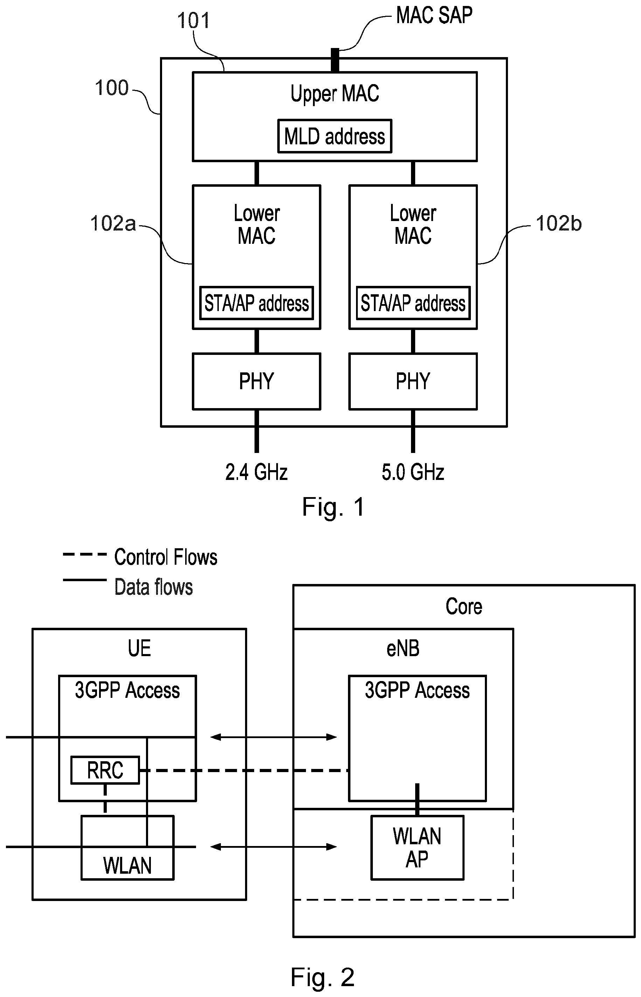

**Figure** 1 illustrates a current multi-link architecture. From a higher-layer perspective, the multi-link device 100 still appears as a single device despite several links on different bands/channels. This means that there is a single medium access control (MAC)-SAP (Service Access Point) and that there is only one logical association between an Access Point (AP) and a non-AP. An AP Multi-Link Device (MLD) is simply composed of multiple AP Stations (STAs), one on each operating band/channel, similarly a non-AP MLD consists of multiple non-AP STAs. Since a set of the functions that are done on MAC-level needs to be done per STA/link such as the construction of the Aggregated MAC PDUs (Protocol Data Units), and a set of functions such as the assignment of Sequence Numbers needs to be performed at MLD level, conceptually, there may also be considered to be an Upper MAC entity 101 and Lower MAC(s) entities 102, where there is a single Upper MAC entity 101 per MLD and multiple Lower MAC entities 102a and 102b per MLD - one for each link (or Station (STA)).

The addressing in an MLD may work by each link having its own separate MAC address (e.g. a station (STA) MAC address), and a separate MAC address being provided for the MLD which can be used to address the MLD (e.g. an MLD MAC address). This means that what a legacy device sees are separate APs on each link, while an MLD will be able to identify the AP MLD through the MLD MAC address.

In 4G Long Term Evolution (LTE) from release 13, work was done to specify integration of 4G LTE with a Wireless Local Area Network (WLAN) to enable off-loading from licensed to unlicensed carriers and thereby increase the throughput due to the abundance of spectrum in unlicensed bands.

**Figure 2** illustrates an example of LTE aggregation with a WLAN. This allows a UE to operate both in licensed and unlicensed at the same time.

Several modes of LTE interworking/aggregation with WLAN were defined. These are:
- LWA (LTE-WLAN Aggregation)
- RCLWI (RAN-Controlled LTE-WLAN Interworking)
- LWIP (LTE-WLAN Radio Level Integration with IPsec Tunnel)

In LTE-WLAN Aggregation (LWA) a wireless device in RRC_CONNECTED mode is configured by the base station to utilize radio resources of both LTE and WLAN. Within LWA there are two possible architectures depending on whether the WLAN termination node is collocated with the base station or not.

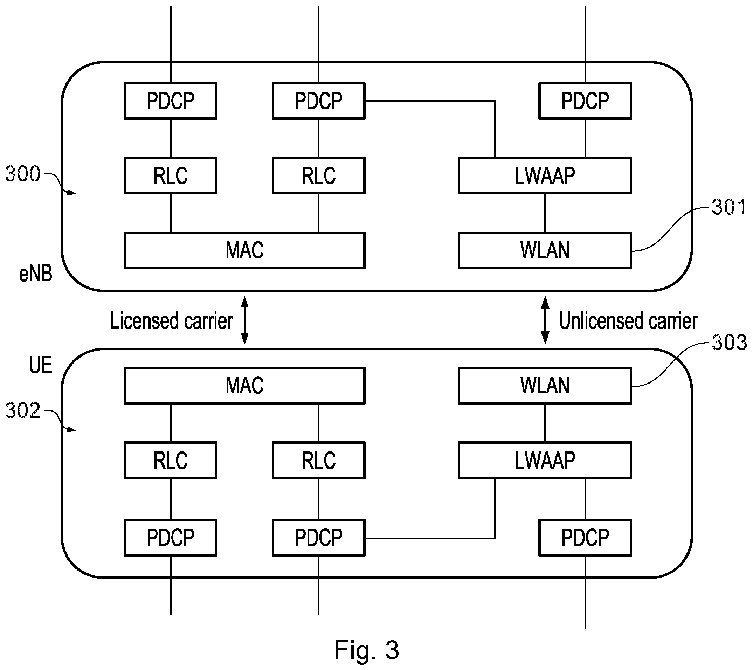

The collocated case is illustrated in **Figure 3****.** In Figure 3, the WLAN termination node 301 is collocated with the base station 300. The WLAN termination node communicates with the WLAN functionality 303 in the wireless device 302.

The LWA works by having an additional leg of Packet Data Convergence Protocol (PDCP) being interfaced with the WLAN AP, which means that Protocol Data Units (PDUs) on a radio bearer may either be sent through the licensed carrier, the 3GPP-stack, or be routed to the WLAN AP for transmission over an unlicensed "carrier". A data threshold may be defined for the wireless device where if the threshold is reached, then the wireless device will transmit data over the WLAN.

In this case, the base station has control over certain parameters that the wireless device uses when communicating through the WLAN. The base station may for instance control the WLAN's Access Category (AC), which defines the Quality of Service (QoS) parameters, which in turn decides how the WLAN operates on the wireless medium. The wireless device may also be configured with the MAC address of the WLAN termination node for off-loading the uplink data.

In RAN-Controlled LTE-WLAN Interworking (RCLWI) the RAN controls wireless device but in a less rigorous way, for instance allowing wireless device to connect through WLAN when the wireless device is in idle mode.

In LTE-WLAN Radio Level Integration with IPsec tunnel (LWIP) the wireless device is configured to send traffic through the WLAN via IPsec tunneling. The multiplexing on the base station and wireless device side is done above PDCP layer but still within the base station and wireless device. This type of interworking is less rigorous as the interface between base station and WLAN is up to implementation.

For mobility, the base station may configure a *mobility set* which is a set of one or more WLAN Access Points Identifiers (e.g. a Basic Service Set Identifier (BSSID), Homogenous Extended Service Set Identified (HESSID), or a Service Set IDentifier (SSID)) between which the wireless device may perform mobility. The following is taken from 3GPP TS 36.463, Release 16, V16.0.0, July 2020.

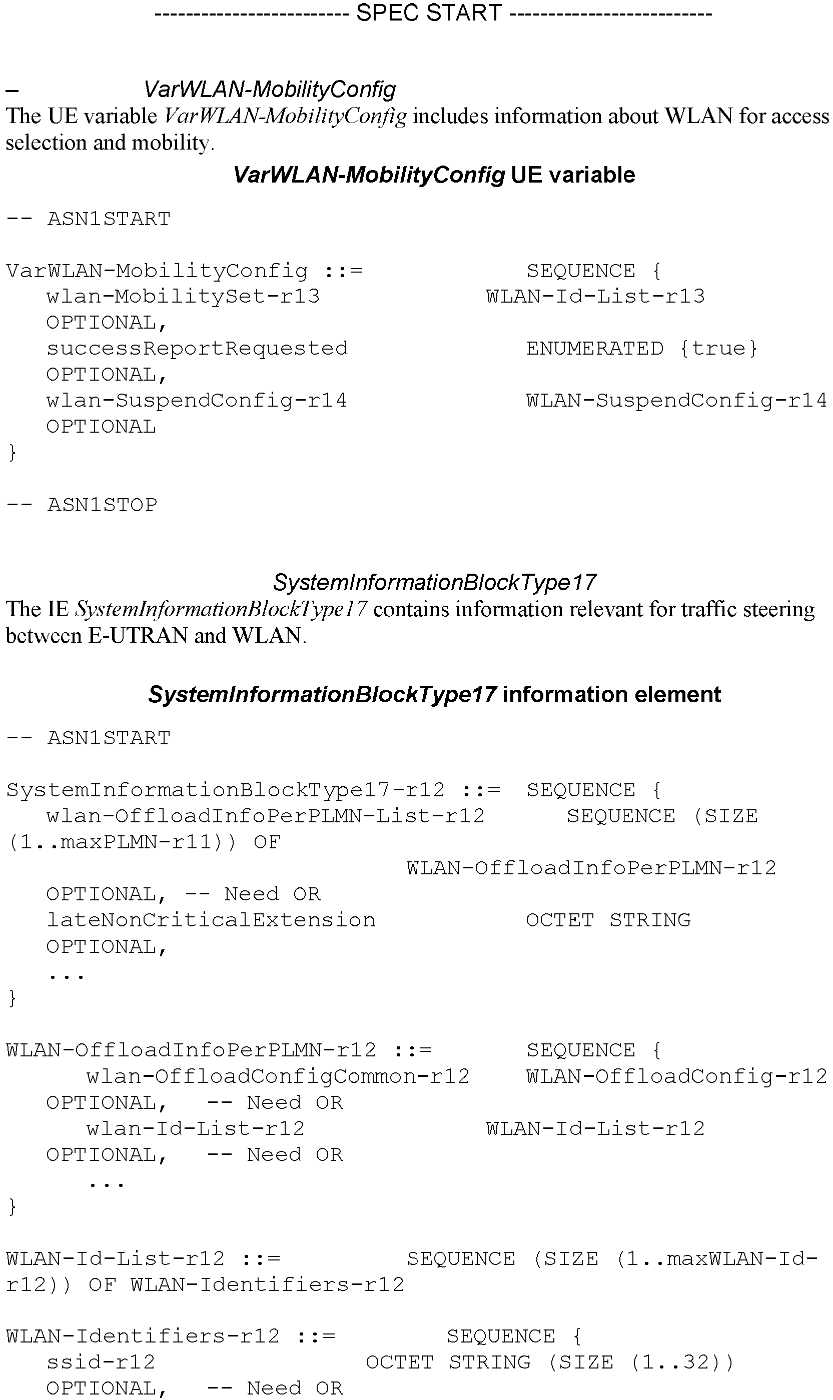

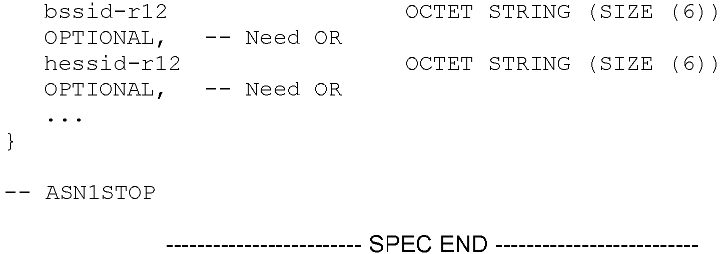

To monitor the WLAN APs in support of WLAN mobility and LWA activation/deactivation, the cellular network may configure the wireless device to perform WLAN measurements.

To allow measurement reporting in the different Radio Access Network (RAN)-level interworking types, the cellular network may configure the wireless device to measure the WLAN carriers and report when certain conditions are triggered. For the sake of measurement triggering, the following measurement events have been defined:
- Event W1: when WLAN becomes better than a threshold
- Event W2: When all WLAN inside WLAN mobility set becomes worse than threshold1 and a WLAN outside WLAN mobility set becomes better than threshold2.
- Event W3: When all WLAN inside WLAN mobility set becomes worse than a threshold

For reporting the measurement results, the wireless device may include the WLAN identifier and the WLAN Received Signal Strength Indicator (RSSI), but then there are a number of optional quantities/metrics that can be reported, such as the WLAN band measured on, the WLAN carrier info, the available admission capacity [e.g. as described in IEEE 802.11-2012], the channel utilization, the number of STAs currently associated with the WLAN AP [e.g. as described in IEEE 802.11-2012] and some more options.

Whenever there are changes in the WLAN connection status, the wireless device may need to inform the network about the status. The WLAN connection status reporting tells the network of the status of the WLAN network through the *WLANConnectionStatusReport.* The status report may be sent when the wireless device successfully connects to a new WLAN, when a WLAN connection attempt fails, when WLAN connections become temporarily unavailable; or when a number of similar conditions occur. The report may comprise the WLAN status which could for instance indicate whether 1) a successful association has been completed, 2) the failure of a WLAN radio link, 3) failure due to WLAN unavailable and 4) timeout of WLAN connection attempt.

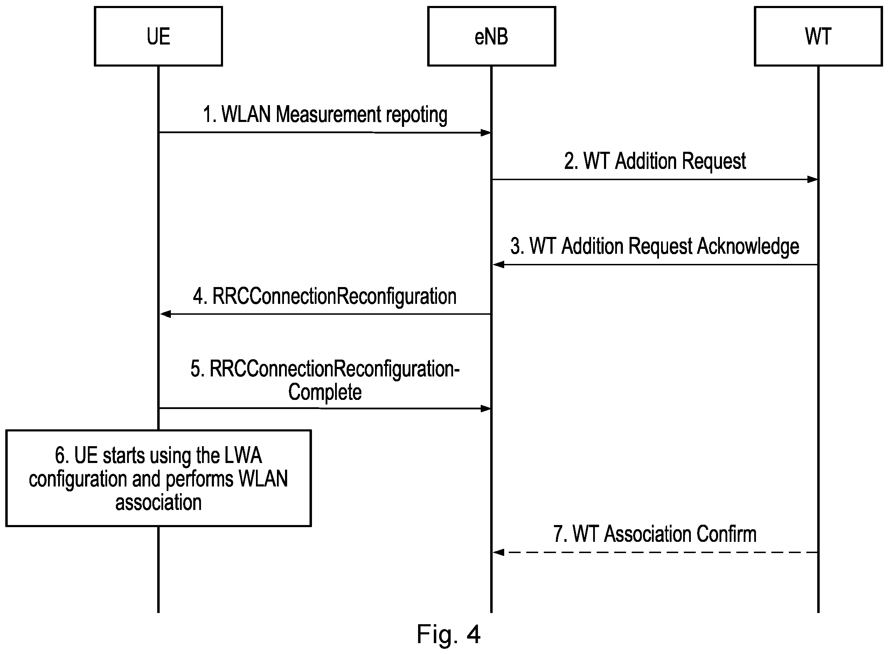

The WLAN Termination (WT) is the logical entity that terminates the Xw interface. The WT is a logical entity that can be located in the WLAN AP or can be a central entity that controls many APs. The operation of establishing a WLAN connection can be seen in **Figure 4****.** The messages *WT addition Request* and *WT Addition Request Acknowledge* are part of the Xw interface between the WT, i.e., the WLAN AP and the base station (e.g. the eNB). The Xw Control plane interface is defined.

The Xw interface includes a wide range of procedures. These include:
- WT Configuration Update - This is to update application level configuration data.
- WT Status Reporting - This is used by an base station to request the reporting of load measurement to a WT. The WT can report the Basic Service Set (BSS) Load, Available channel utilization, and similar metrics.
- WT Addition Preparation - This is used to request the WT to allocate resources for LWA operation for a specific wireless device. This can for instance include Quality of Service (QoS) parameters.
- eNB/WT Initiated WT Modification - This can be used to modify the wireless device context at the WT or the wireless device context at the base station.
- eNB/WT Initiated WT Release - This is used to notify or trigger the release of a wireless device at the WT.
- WT Association Confirmation - This is used by the WT to give confirmation to the base station that a wireless device has associated with the WT.

In LTE-WLAN aggregation, the establishment configuration works by giving the wireless device one or more identifiers (where each identifier identifies a WLAN Access Point) where the WLAN part of the wireless device can establish connections to. For a WLAN with multi-link capabilities, this type of indication will be unclear to the wireless device since it would only allow the wireless device to connect a single link to an AP MLD through the given BSSID. This would lead to several inefficiencies because the WLAN might not be able to utilize multi-link feature.

Similarly, for configuring the mobility set, it is unclear how the set of MAC addresses should be treated and whether the wireless device may establish more than one link with the same MLD AP.

Measurements and measurement triggering are crucial for the cellular network to be able to identify whether it is beneficial to perform certain actions, such as configuring the wireless device to offload data on a WLAN carrier. With ML capable devices it is not clear how such measurements should be triggered.

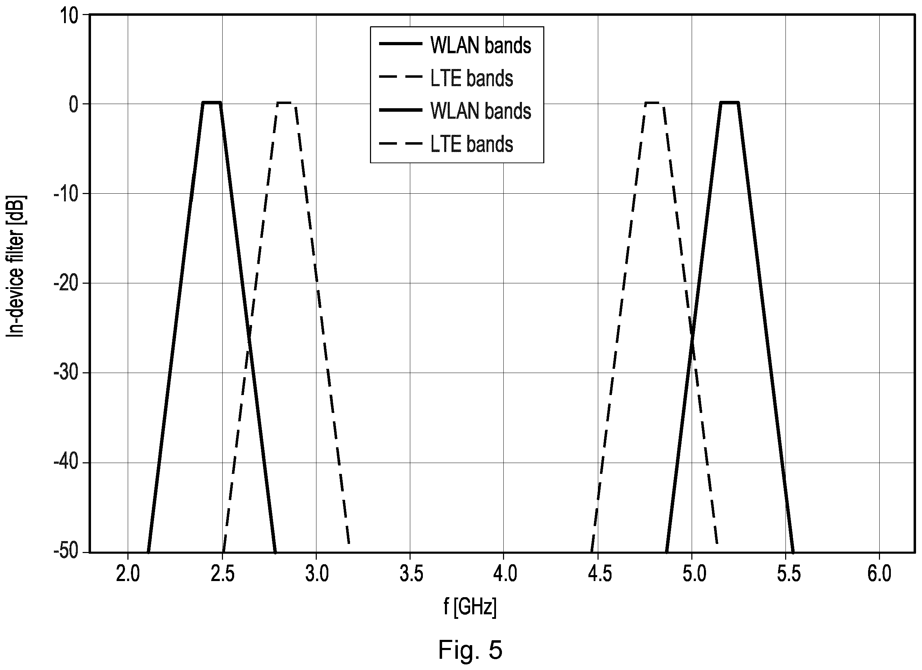

Furthermore, due to non-ideal Radio Frequency (RF) filtering in the wireless device, the WLAN might establish links that can cause in-device interference due to interband leakages between cellular and WLAN. In this case it may be crucial that the cellular network has good control of where the wireless device establishes links. This in-device interference is illustrated **Figure** 5. In particular, Figure 5 illustrates in-device leakage between WLAN and cellular carrier bands if the WLAN device is allowed to freely establish links with a device.

It is known from the US 2020221534 A1 about apparatuses, methods, and systems for WLAN selection. One apparatus includes a transceiver that receives a WLAN selection/routing command and a controller that identifies whether the apparatus has selected a WLAN. The controller further determines whether to accept WLAN selection/routing commands based on a device configuration and/or whether the apparatus has selected a WLAN. It is also known from the US 2021045175 A1 about systems, methods, and devices related to an extreme high throughput (EHT) signaling structure. It is also known from the WO 2021011476 A1 about systems, methods, and devices for enabling multi-link wireless local area networks (WLAN). It is also known from INSUN JANG (LG ELECTRONICS), "Discussion on Multi-link Setup", vol. 802.11 EHT; 802.11be, no. 5, about a multi-link setup procedure wherein a ML AP logical entity and ML non-AP logical entities may negotiate multi-link capabilities through one or more links.

### Summary

According to some embodiments there is provided a method in a base station for configuring a multi-link Wireless Local Area Network, WLAN, connection between a wireless device and a first WLAN termination node. The method comprises transmitting, to the wireless device, a multi-link configuration comprising one or more first addresses, wherein the one or more first addresses comprises one of: a multi-link device address associated with the first WLAN termination node; and a plurality of addresses each associated with a single link to the first WLAN termination node.

According to some embodiments there is provided a method, in a wireless device, for configuring a multi-link Wireless Local Area Network, WLAN, connection between the wireless device and a first WLAN termination node. The method comprises receiving, from a base station, a multi-link configuration comprising one or more first addresses, wherein the one or more first addresses comprises one of: a multi-link device address associated with the first WLAN termination node; and one or more single link addresses each associated with a single link to the first WLAN termination node; for each of the one or more first addresses, establishing at least one link with the first WLAN termination node utilizing the first address; and offloading traffic from a connection to the base station to the at least one link with the first WLAN termination node.

According to some embodiments there is provided a base station for configuring a multi-link WLAN connection between a wireless device and a first WLAN termination node. The base station comprises processing circuitry configured cause the base station to: transmit, to the wireless device, a multi-link configuration comprising one or more first addresses, wherein the one or more first addresses comprises one of: a multi-link device address associated with the first WLAN termination node; and a plurality of addresses each associated with a single link to the first WLAN termination node.

According to some embodiments there is provided a wireless device for configuring a multi-link Wireless Local Area Network, WLAN, connection between the wireless device and a first WLAN termination node. The wireless device comprises processing circuitry configured to cause the wireless device to: receive, from a base station, a multi-link configuration comprising one or more first addresses, wherein the one or more first addresses comprises one of: a multi-link device address associated with the first WLAN termination node; and one or more single link addresses each associated with a single link to the first WLAN termination node; and for each of the one or more first addresses, establish at least one link with the first WLAN termination node utilizing the first address; and offload traffic from a connection to the base station to the at least one link with the first WLAN termination node.

### Brief Description of the Drawings

For a better understanding of the embodiments of the present disclosure, and to show how it may be put into effect, reference will now be made, by way of example only, to the accompanying drawings, in which:
Figure 1 illustrates a current multi-link architecture;
Figure 2 illustrates an example of LTE aggregation with a WLAN;
Figure 3 illustrates an example in which the WLAN termination node is collocated with the base station;
Figure 4 illustrates the operation of establishing a WLAN connection;
Figure 5 is a graph illustrating in-device leakage between WLAN and cellular carrier bands if the WLAN device is allowed to freely establish links with a device;
Figure 6 illustrates a method in a base station for configuring a multi-link WLAN connection between a wireless device and a first WLAN termination node;
Figure 7 illustrates a method, in a wireless device, for configuring a multi-link WLAN connection between the wireless device and a first WLAN termination node;
Figure 8 illustrates an example implementation of the methods of Figures 6 and 7;
Figure 9 illustrates an example implementation of the methods of Figures 6 and 7;
Figure 10 illustrates a method in a base station for configuring a multi-link WLAN connection between a wireless device and a WLAN termination node;
Figure 11 illustrates a method in a WLAN termination node for configuring a multi-link WLAN connection between a wireless device and the WLAN termination node;
Figure 12 illustrates a method, in a wireless device for configuring a multi-link WLAN connection between a wireless device and a WLAN termination node;
Figure 13 illustrates an example implementation of the methods of Figures 10 to 12;
Figure 14 illustrates an example implementation of the methods of Figures 10 to 12;
Figure 15 illustrates a method in a wireless device in communication with a base station and in communication with a multi-link WLAN termination node using a plurality of links;
Figure 16 illustrates a base station comprising processing circuitry (or logic);
Figure 17 illustrates a wireless device comprising processing circuitry (or logic);
Figure 18 illustrates a base station comprising processing circuitry (or logic);
Figure 19 illustrates a WLAN termination node comprising processing circuitry (or logic);
Figure 20 illustrates a wireless device comprising processing circuitry (or logic);
Figure 21 illustrates a wireless device comprising processing circuitry (or logic);

### Description

The following sets forth specific details, such as particular embodiments or examples for purposes of explanation and not limitation. It will be appreciated by one skilled in the art that other examples may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analogue) circuitry including but not limited to application specific integrated circuit(s) (ASIC) and/or field programmable gate array(s) (FPGA(s)), and (where appropriate) state machines capable of performing such functions.

Embodiments described herein provide methods and apparatuses for configuring a multi-link WLAN connection between a wireless device and a first WLAN termination node. Some examples described herein are given for proper understanding the present invention. They provide the cellular network with the ability to completely or partially control the establishment, measurements and reporting of a multi-link to the WLAN in a RAN interworking scenario.

It will be appreciated that references to a cellular network may comprise LTE, NR or any other past of future cellular network.

It will also be appreciated that the term "wireless device" encompasses a UE performing both the 3GPP RAN functions as well as the WLAN non-AP station (STA) functions.

Multi-link operation may provide benefits in terms of performance and latency but is expected to be costly in terms of battery power. Thus in order to enable a network to offload part of the traffic from a cellular network (e.g. NR/LTE) to a WLAN but also help the device preserve battery, embodiments described herein allow for the cellular network to control the establishment of multi-link connections within the WLAN connection.

In particular, embodiments described herein provide two pathways through which a multi-link connection may be established (or more links added to an existing multi-link connection), either through the wireless device or through the Access Point (AP) for the WLAN.

In some embodiments, the cellular network is able to control the wireless device-based establishment or re-establishment of a link(s) in a multi-link device.

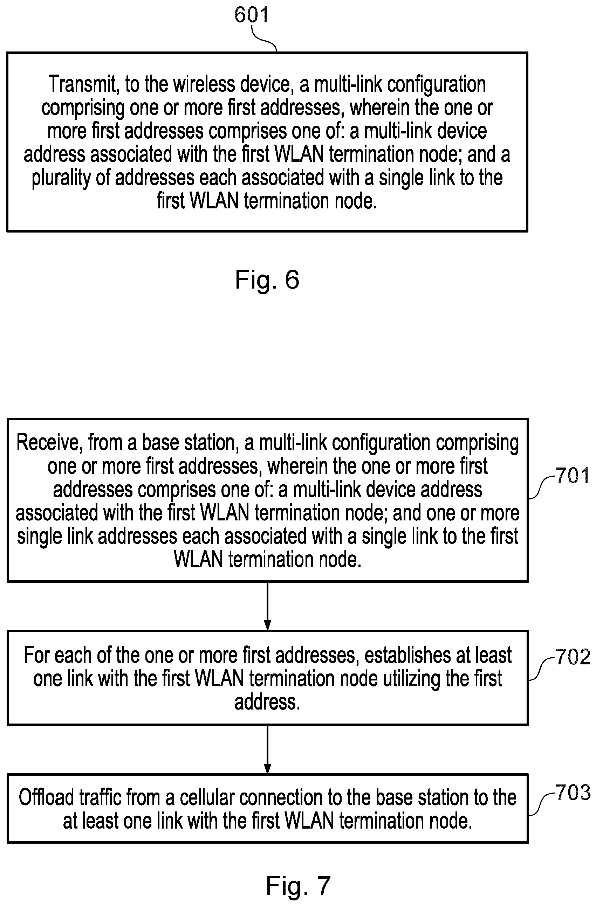

**Figure** 6 illustrates a method in a base station for configuring a multi-link WLAN connection between a wireless device and a first WLAN termination node. A WLAN termination node may comprise a WLAN Access Point (AP).

In step 601 the base station transmits, to the wireless device, a multi-link configuration comprising one or more first addresses, wherein the one or more first addresses comprises one of: a multi-link device address associated with the first WLAN termination node; and a plurality of addresses each associated with a single link to the first WLAN termination node.

**Figure** 7 illustrates a method, in a wireless device, for configuring a multi-link WLAN connection between the wireless device and a first WLAN termination node.

In step 701, the wireless device receives, from a base station, a multi-link configuration comprising one or more first addresses, wherein the one or more first addresses comprises one of: a multi-link device address associated with the first WLAN termination node; and one or more single link addresses each associated with a single link to the first WLAN termination node.

In step 702, the wireless device, for each of the one or more first addresses, establishes at least one link with the first WLAN termination node utilizing the first address.

In step 703, the wireless device, offloads traffic from a cellular connection to the base station to the at least one link with the first WLAN termination node.

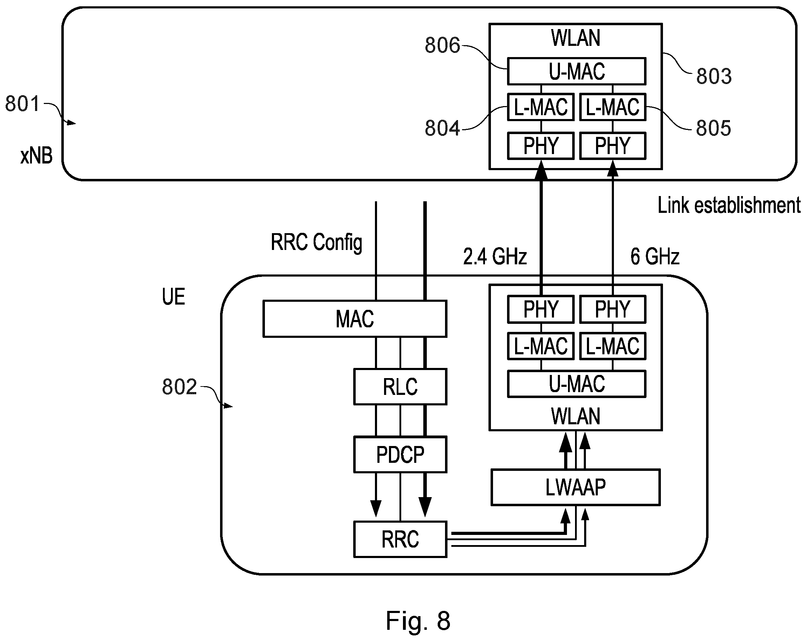

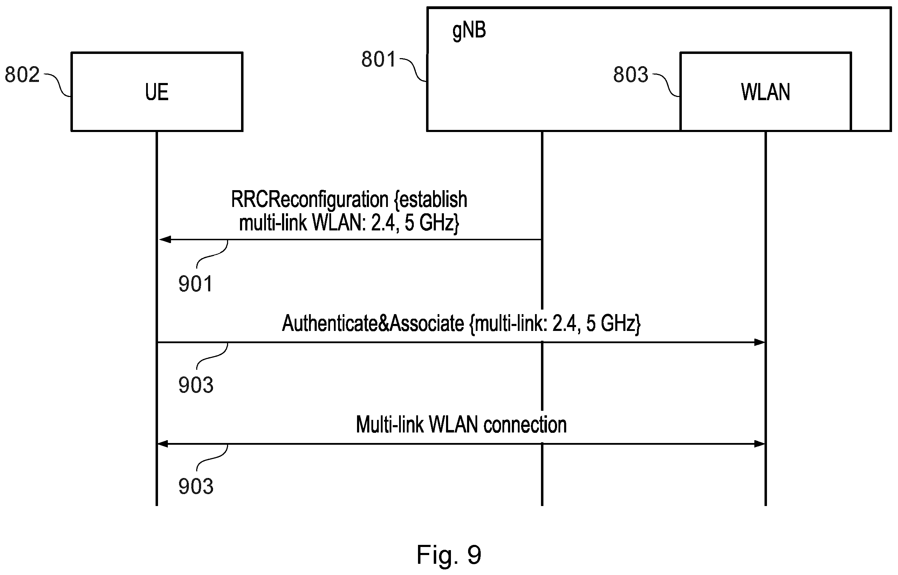

**Figures 8** **and** 9 illustrate an example implementation of the methods of Figures 6 and 7. In this example, the base station 801 transmits, in step 901, to the wireless device 802, two single link addresses each associated with a single link to the first WLAN termination node 803. In this example, the two single link addresses are associated with 2.4 GHz and 5GHz links respectively. In this example, the WLAN termination node is illustrated as being co-located with the base station 801. However, it will be appreciated that the first WLAN termination node 803, may be located external to the base station 801. The WLAN termination node 803 and the base station may communicate over an Xw interface.

In this example, the two single link addresses identify the STA address 804 and the STA Address 805.

In step 902, the wireless device 802 establishes the two links with the WLAN termination node 803.

In step 903, the wireless device 802 and WLAN termination node 803 communicate using the multi-link connection. In particular, cellular traffic between the wireless device 802 and the base station 801 may be offloaded onto the multi-link connection between the wireless device 802 and the WLAN termination node 803.

In some examples, the base station 801 may instead only transmit to the wireless device 802, the MLD address for the WLAN termination node (e.g. the MLD address 806). In these examples, the wireless device 802 may therefore have the freedom to decide which, or how many links to configure in either channel/band depending on both UE and WLAN capabilities.

With this method, the wireless device may be restricted as to which or how many links it can establish based on different modes of operation.

For example, the multi-link configuration transmitted by the base station to the wireless device may comprise the mode associated with the wireless device.

The wireless device may then be configured to determine the mode associated with the wireless device; and establish a first number of links with the first WLAN termination node, wherein the first number of links is controlled based on the mode.

For example, responsive to the mode comprising a restricted mode, the wireless device may limit the first number of links to one. The link may be established on any frequency. The restricted mode may for instance be used when power saving is important.

For example, responsive to the mode comprising a non-restricted mode, the wireless device may allow the first number to be limited by a number of available links. For example, in the example in Figures 8 and 9, only two possible links are available. It will however be appreciated that in some examples, there may be any number of available links. In this example, the wireless device has freedom (within the number of possible links) to establish as many links as it wants. This non-restricted mode may be beneficial for high throughput cases, and for whenever the cellular network may not have that much control of the WLAN device.

For example, responsive to the mode comprising a conditioned mode, the wireless device may allow the first number to be limited by a number of available links responsive to one or more conditions being met. In other words, there may be certain conditions for establishing more links, thus the UE is allowed to freely establish links only if some conditions are met. The one or more conditions may comprise one or more of: a requirement for a certain level of uplink traffic from the wireless device; and a latency requirement (for example, a latency requirement for the uplink or downlink traffic) being below a predetermined threshold.

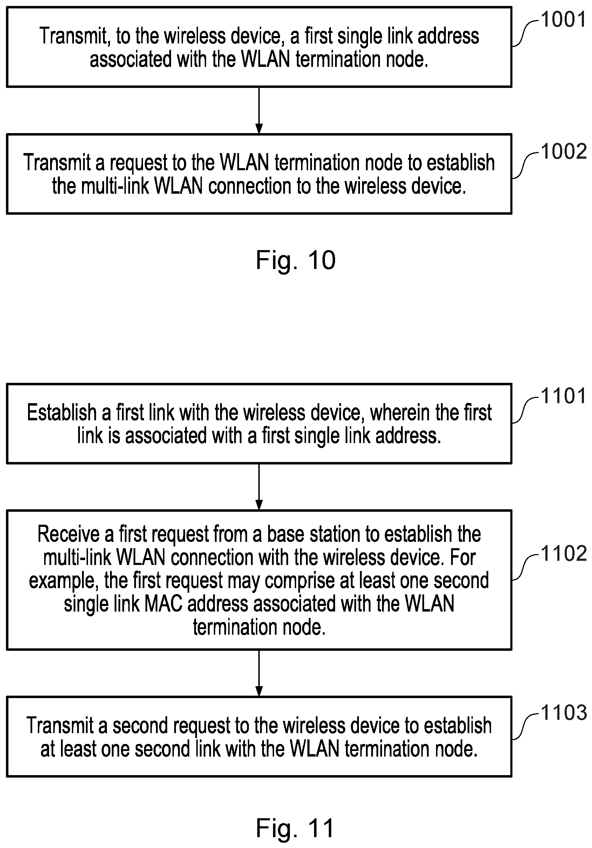

In some embodiments (e.g. as described with reference to Figures 10 to 14), the base station may only transmit one or more single-link addresses to the wireless device, and the wireless device may use these one or more single-link addresses to first establish a single-link connection with the WLAN AP.

In order to establish a multi-link connection, the cellular network (e.g. the base station) may then instruct the WLAN termination node to establish multiple links with the wireless device, thereby establishing a multi-link connection. These embodiments require some communication (e.g. inter-node signaling) between the base station and WLAN termination node, and this instruction to establish multiple links may for example include the allowed frequency bands etc. The benefit of these embodiments is that the multi-link connection is controlled only by the network (e.g. not by the wireless device).

**Figure 10** illustrates a method in a base station for configuring a multi-link WLAN connection between a wireless device and a WLAN termination node

In step 1001, the base station transmits, to the wireless device, a first single link address associated with the WLAN termination node.

In step 1002, the base station transmits a request to the WLAN termination node to establish the multi-link WLAN connection to the wireless device. In some examples, the request transmitted in step 1002 comprises a second single link address for use by the WLAN termination node in establishing the multi-link WLAN connection. For example, the second single link address may comprise a STAMAC address associated with a single link to the wireless device.

**Figure 11** illustrates a method in a WLAN termination node for configuring a multi-link WLAN connection between a wireless device and the WLAN termination node.

In step 1101, the WLAN termination node establishes a first link with the wireless device, wherein the first link is associated with a first single link address.

In step 1102, the WLAN termination node receives a first request from a base station to establish the multi-link WLAN connection with the wireless device. For example, the first request may comprise at least one second single link MAC address associated with the WLAN termination node.

In step 1103, the WLAN termination node transmits a second request to the wireless device to establish at least one second link with the WLAN termination node. For example, the second request may comprise the at least one second single link MAC address.

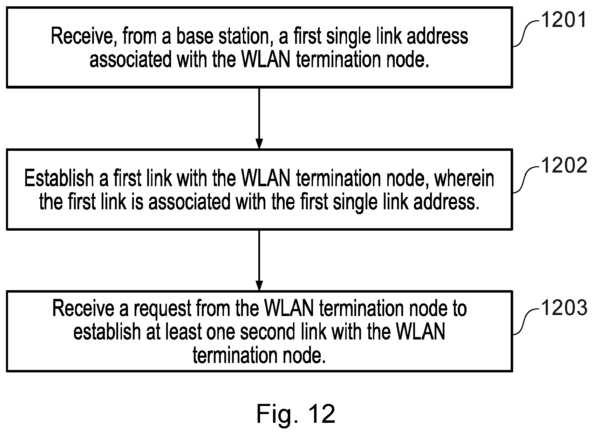

**Figure 12** illustrates a method, in a wireless device for configuring a multi-link WLAN connection between a wireless device and a WLAN termination node.

In step 1201, the wireless device receives, from a base station, a first single link address associated with the WLAN termination node.

In step 1202, the wireless device establishes a first link with the WLAN termination node, wherein the first link is associated with the first single link address.

In step 1203, the wireless device receives a request from the WLAN termination node to establish at least one second link with the WLAN termination node. The request may comprise at least one second single link addresses associated with the WLAN termination node. The wireless device may then establish at least one second link utilizing the at least one second single link address.

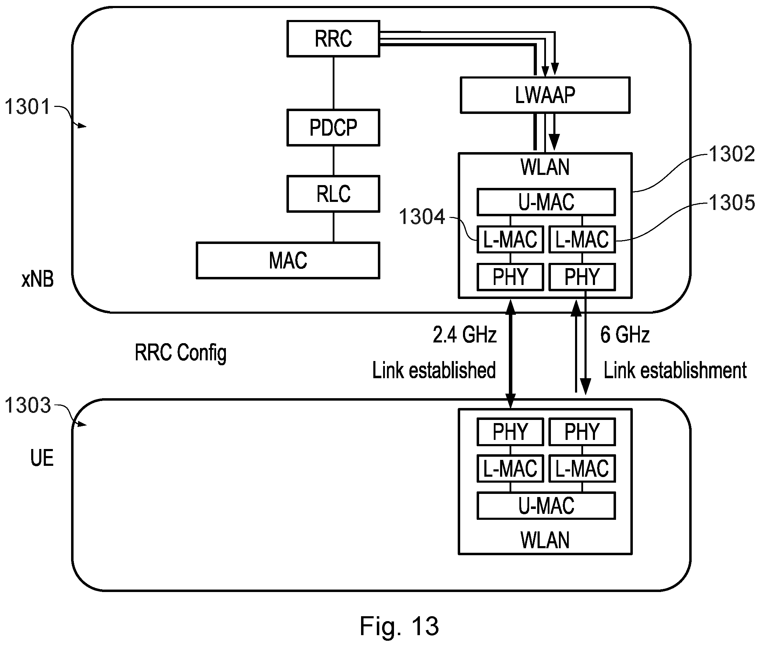

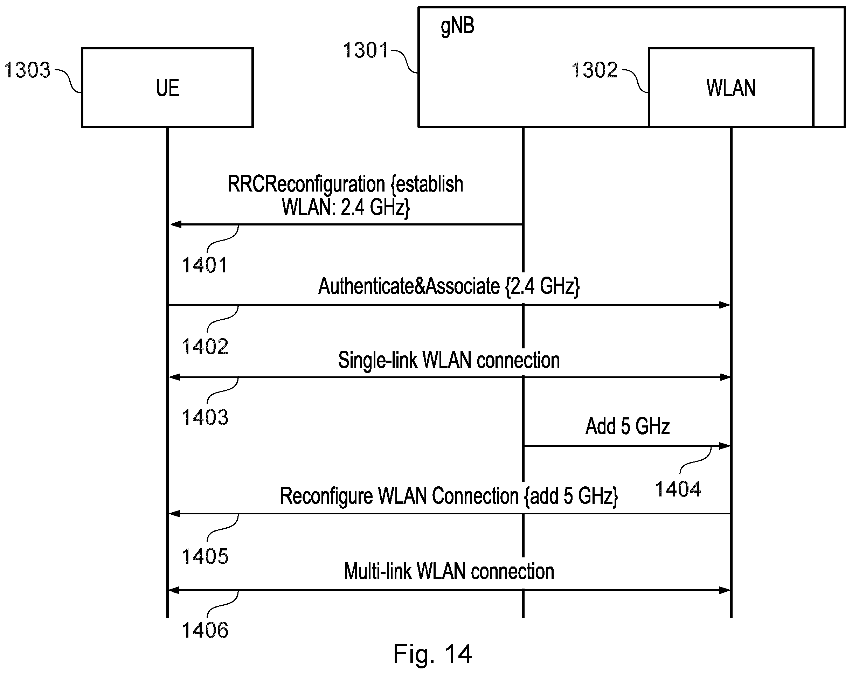

**Figures 13** **and** **14** illustrate an example implementation of the methods of Figures 10 to 12. In this example, the base station 1301 transmits, in step 1401, a first single link address associated with the WLAN termination node 1302 to the wireless device 1303. In this example, the first single link address may comprise an STA MAC address 1304 associated with a single link to the WLAN termination node 1302.

In step 1402, the wireless device 1303 establishes a first link with the WLAN termination node 1302 utilizing the first single link address.

In step 1403, the wireless device 1303 and the WLAN termination node 1302 communicate utilizing the first link.

In step 1404, the base station 1301 transmits first request to the WLAN termination node 1302 to establish the multi-link WLAN connection with the wireless device 1303. The first request comprises an indication of the STA MAC address 1305 associated with a single link to the WLAN termination node 1302. In this example, the STA MAC address 1305 is associated with a 5GHz link.

In step 1405, the WLAN termination node 1302 transmits a request to the wireless device 1303 to establish a second link with the WLAN termination node. The request comprises an indication of the STA MAC address 1305.

In step 1406, the wireless device 1303 establishes the second link utilizing the STA MAC address 1305.

In some embodiments (e.g. the embodiments described with reference to any of figures 6 to 14), the cellular network may for instance configure how the wireless device should operate with the WLAN AP using the multi-link. For example, the cellular network may configure the UE to replicate its frame over the multiple links to increase reliability, or may also configure which access category the wireless device should use across the multiple links, or may configure the wireless device to operate in a low latency mode.

This configuration may be performed by the base station transmitting a request to the wireless device to perform one or more of: transmitting data over multiple links, utilizing an access category indicated by the base station, or operating in a low latency mode. In some examples, the request may be transmitted via the WLAN termination node.

In another embodiment, a plurality of links may be established between the wireless device and the WLAN termination node, but the cellular network may configure a certain bearer to utilize only specific links in the WLAN. For example, the base station may transmit a bearer configuration to the wireless device to configure a first radio bearer to transmit using a subset of a plurality of links between the wireless device and the first WLAN termination node. The bearer configuration may in some examples be transmitted via the WLAN termination node.

This configuration may, for example, be performed by configuring a radio bearer with a specific TID (Traffic Identifier). The TID is used as a traffic identifier and in current multi-link standard, there is a TID-to-link mapping that maps a traffic stream to operate over a certain set of links. In this embodiment, the cellular network may also configure the TID-to-link mapping that the wireless device shall use for a specific radio bearer.

In other words, the bearer configuration may comprise a mapping that maps a traffic identifier associated with the first radio bearer to the subset of the plurality of links between the wireless device and the first WLAN termination node.

To allow for the wireless device to perform mobility in a network of multi-links, the wireless device may be configured with a set of multi-link WLAN termination nodes. For example, for the embodiments described with reference to Figures 6 to 9, this may mean that one or more first addresses further comprises at least one address associated with a second WLAN termination node.

In some embodiments, this may, for example, mean that the wireless device is configured with a set of WLAN termination nodes and their identifiers on each frequency band. In a more advanced embodiment, the wireless device may be configured with a set of WLAN termination nodes each associated with a mode of operation (e.g. the modes restricted, non-restricted and conditioned as previously described).

If the wireless device is, for example, configured with multiple WLAN termination nodes each associated with a non-restricted mode, the wireless device is allowed to establish as many links as are available to one of the multiple WLAN termination nodes.

In one embodiment, the cellular network may instruct the wireless device to connect to a specific WLAN termination node within the mobility set, possibly including the specific link to connect to. For example, the base station may transmit a request to the wireless device to request that the wireless device connect to a particular WLAN termination node.

This request may be beneficial as it means that the wireless device may connect to a WLAN termination node without reconfiguring the mobility set and related parameters. This type of request is different from the current methods as the current methods configure the wireless device with a mobility set that it can choose from, which may require more measurement and synchronization of multiple WLAN termination nodes, whilst this "one-shot" request may make the procedures more clear and fast from an establishment point of view. For example, this request allows the wireless device to connect to a specific link without measuring the link first, possibly utilizing measurements collected by other wireless devices.

In order to support the multi-link connection, the WLAN termination node may transmit information to the base station, for example over the Xw interface.

For example, a WLAN termination node may transmit information relating to the WLAN termination node. The information may comprise any one of : multi-link capability of the WLAN termination node; information about the links of the WLAN termination node; the bandwidth of each link supported by the WLAN termination node; statistics such as a Basic Service Set (BSS) load and/or channel utilization of each link supported by the WLAN termination node; and a single link address associated with each link supported by the WLAN termination node.

This information may help the base station to make better decisions regarding about where the wireless device can or should establish links with the WLAN termination node. For example, the base station may determine the multi-link configuration based on the information relating to the first WLAN termination node.

To get a better sense of the general radio environment, instead of having the measurement conditions being based on a single link, in some examples given for proper understanding the present invention measurement reports may be triggered based on the combined or average radio environment of two or more links to a WLAN termination node. This provides the network with a simpler measure of the state of the combined links, as the multiple links might temporarily have better or worse quality.

How the wireless device is to perform the measurements and measurement reports may be configured by the base station.

The wireless device may then perform measurements of signal quality (e.g. signal strength) on the plurality of links; and may report the measurements to the base station responsive to a metric associated with the plurality of links combined meeting a predetermined criterion. For example, the metric may comprise a sum of the measurements, and the predetermined criterion may comprise the sum of the measurements being above a predetermined threshold. In some examples, the metric may comprise an average of measurements of signal strength of the plurality of links, and the predetermined criterion may comprise the average of the measurements being above a predetermined threshold.

For reporting the measurements to the base station, the wireless device in some examples given for proper understanding the present invention may include the measurements of all links, and also include the information on what WLAN termination node that these measurements originated from. This may for instance be performed by optionally including the MLD MAC address associated with the WLAN termination node along with the link MAC address in the measurement reporting. As an example, this means that if a measurement is triggered based on a single link then the wireless device may include measurements on other links which may help the network optimize the configuration and determine whether the multi-link operation is beneficial.

In order to keep the cellular network updated on the WLAN connection status on the various links toward each WLAN termination node, the wireless device may have mechanisms to update the cellular network on how the WLAN connection is working. This may, for example, include the status of how the multi-link connection is functioning. After having attempted establishing a link on a band, in one embodiment the wireless device may report to the base station the status after each link has been established (or failed to establish). As an alternative, the wireless device may report to the base station an indication of how many links have been established after an association attempt. In another embodiment the wireless device may report to the base station whenever there are any problems with any of the links.

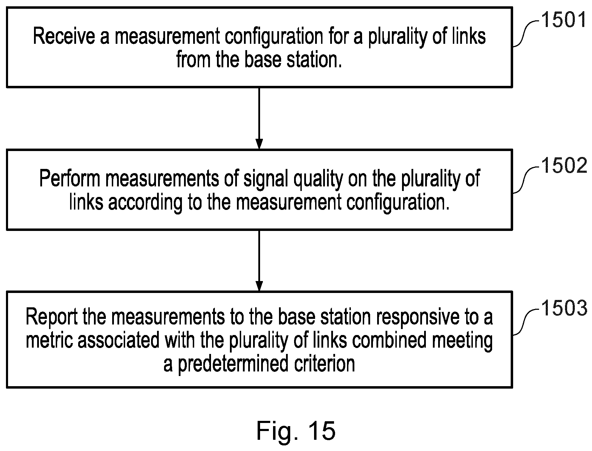

**Figure 15** illustrates a method in a wireless device in communication with a base station and in communication with a multi-link WLAN termination node using a plurality of links according to one of the examples given for proper understanding the present invention.

In step 1501, the wireless device receives a measurement configuration for a plurality of links from the base station. In other words, the base station transmits a measurement configuration to the wireless device.

In step 1502, the wireless device performs measurements of signal quality on the plurality of links according to the measurement configuration.

In step 1503, the wireless device reports the measurements to the base station responsive to a metric associated with the plurality of links combined meeting a predetermined criterion. The base station may therefore receive reports of measurements responsive to the metric associated with the plurality of links combined meeting the predetermined criterion. For example, the metric may comprise a sum of the measurements, and the predetermined criterion may comprise the sum of the measurements being above a predetermined threshold. In some examples, the metric may comprise an average of measurements of signal strength of the plurality of links, and the predetermined criterion may comprise the average of the measurements being above a predetermined threshold.

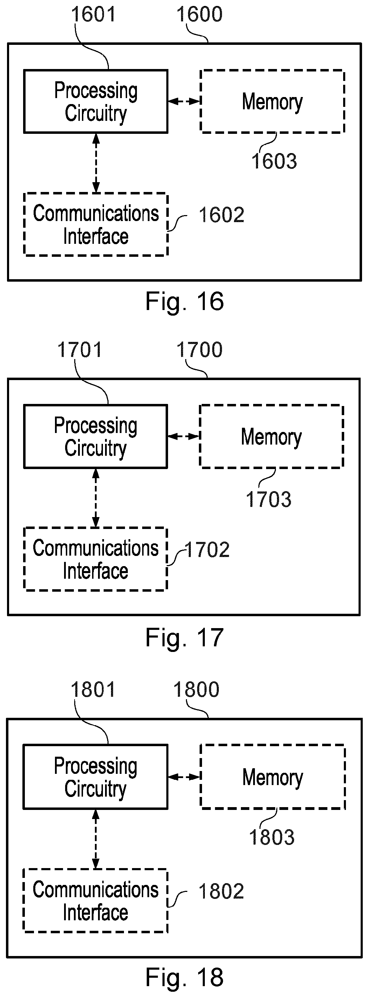

**Figure 16** illustrates a base station 1600 comprising processing circuitry (or logic) 1601. The processing circuitry 1601 controls the operation of the base station 1600 and can implement the method described herein in relation to a base station 1600. The processing circuitry 1601 can comprise one or more processors, processing units, multi-core processors or modules that are configured or programmed to control the base station 1600 in the manner described herein. In particular implementations, the processing circuitry 1601 can comprise a plurality of software and/or hardware modules that are each configured to perform, or are for performing, individual or multiple steps of the method described herein in relation to the base station 1600.

Briefly, the processing circuitry 1601 of the base station 1600 is configured to cause the base station 1600 to: transmit, to the wireless device, a multi-link configuration comprising one or more first addresses, wherein the one or more first addresses comprises one of: a multi-link device address associated with the first WLAN termination node; and a plurality of addresses each associated with a single link to the first WLAN termination node.

In some embodiments, the base station 1600 may optionally comprise a communications interface 1602. The communications interface 1602 of the base station 1600 can be for use in communicating with other nodes, such as other virtual nodes. For example, the communications interface 1602 of the base station 1600 can be configured to transmit to and/or receive from other nodes requests, resources, information, data, signals, or similar. The processing circuitry 1601 of base station 1600 may be configured to control the communications interface 1602 of the base station 1600 to transmit to and/or receive from other nodes requests, resources, information, data, signals, or similar.

Optionally, the base station 1600 may comprise a memory 1603. In some embodiments, the memory 1603 of the base station 1600 can be configured to store program code that can be executed by the processing circuitry 1601 of the base station 1600 to perform the method described herein in relation to the base station 1600. Alternatively or in addition, the memory 1603 of the base station 1600, can be configured to store any requests, resources, information, data, signals, or similar that are described herein. The processing circuitry 1601 of the base station 1600 may be configured to control the memory 1603 of the base station 1600 to store any requests, resources, information, data, signals, or similar that are described herein.

**Figure 17** illustrates a wireless device 1700 comprising processing circuitry (or logic) 1701. The processing circuitry 1701 controls the operation of the wireless device 1700 and can implement the method described herein in relation to a wireless device 1700. The processing circuitry 1701 can comprise one or more processors, processing units, multi-core processors or modules that are configured or programmed to control the wireless device 1700 in the manner described herein. In particular implementations, the processing circuitry 1701 can comprise a plurality of software and/or hardware modules that are each configured to perform, or are for performing, individual or multiple steps of the method described herein in relation to the wireless device 1700.

Briefly, the processing circuitry 1701 of the wireless device 1700 is configured to cause the wireless device 1700 to: receive, from a base station, a multi-link configuration comprising one or more first addresses, wherein the one or more first addresses comprises one of: a multi-link device address associated with the first WLAN termination node; and one or more single link addresses each associated with a single link to the first WLAN termination node; for each of the one or more first addresses, establish at least one link with the first WLAN termination node utilizing the first address; and offload traffic from a connection to the base station to the at least one link with the first WLAN termination node.

In some embodiments, the wireless device 1700 may optionally comprise a communications interface 1702. The communications interface 1702 of the wireless device 1700 can be for use in communicating with other nodes, such as other virtual nodes. For example, the communications interface 1702 of the wireless device 1700 can be configured to transmit to and/or receive from other nodes requests, resources, information, data, signals, or similar. The processing circuitry 1701 of wireless device 1700 may be configured to control the communications interface 1702 of the wireless device 1700 to transmit to and/or receive from other nodes requests, resources, information, data, signals, or similar.

Optionally, the wireless device 1700 may comprise a memory 1703. In some embodiments, the memory 1703 of the wireless device 1700 can be configured to store program code that can be executed by the processing circuitry 1701 of the wireless device 1700 to perform the method described herein in relation to the wireless device 1700. Alternatively or in addition, the memory 1703 of the wireless device 1700, can be configured to store any requests, resources, information, data, signals, or similar that are described herein. The processing circuitry 1701 of the wireless device 1700 may be configured to control the memory 1703 of the wireless device 1700 to store any requests, resources, information, data, signals, or similar that are described herein.

**Figure 18** illustrates a base station 1800 comprising processing circuitry (or logic) 1801. The processing circuitry 1801 controls the operation of the base station 1800 and can implement the method described herein in relation to a base station 1800. The processing circuitry 1801 can comprise one or more processors, processing units, multi-core processors or modules that are configured or programmed to control the base station 1800 in the manner described herein. In particular implementations, the processing circuitry 1801 can comprise a plurality of software and/or hardware modules that are each configured to perform, or are for performing, individual or multiple steps of the method described herein in relation to the base station 1800.

Briefly, the processing circuitry 1801 of the base station 1800 is configured to cause the base station 1800 to: transmit, to the wireless device, a first single link address associated with the WLAN termination node; and transmit a request to the WLAN termination node to establish the multi-link WLAN connection to the wireless device.

In some embodiments, the base station 1800 may optionally comprise a communications interface 1802. The communications interface 1802 of the base station 1800 can be for use in communicating with other nodes, such as other virtual nodes. For example, the communications interface 1802 of the base station 1800 can be configured to transmit to and/or receive from other nodes requests, resources, information, data, signals, or similar. The processing circuitry 1801 of base station 1800 may be configured to control the communications interface 1802 of the base station 1800 to transmit to and/or receive from other nodes requests, resources, information, data, signals, or similar.

Optionally, the base station 1800 may comprise a memory 1803. In some embodiments, the memory 1803 of the base station 1800 can be configured to store program code that can be executed by the processing circuitry 1801 of the base station 1800 to perform the method described herein in relation to the base station 1800. Alternatively or in addition, the memory 1803 of the base station 1800, can be configured to store any requests, resources, information, data, signals, or similar that are described herein. The processing circuitry 1801 of the base station 1800 may be configured to control the memory 1803 of the base station 1800 to store any requests, resources, information, data, signals, or similar that are described herein.

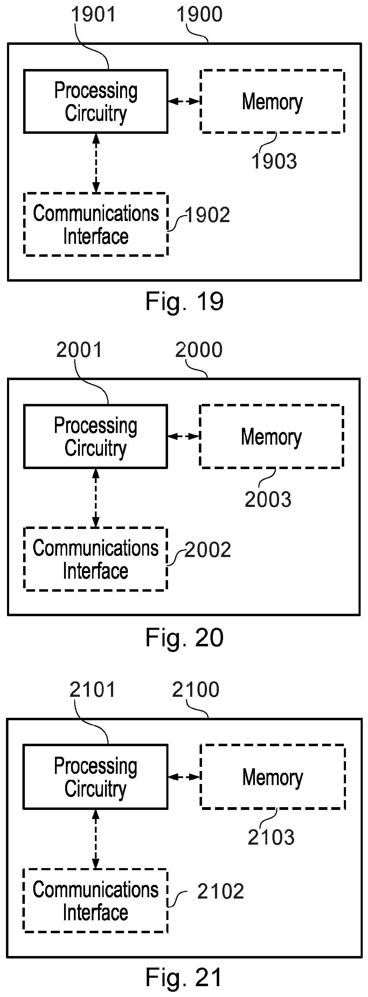

**Figure 19** illustrates a WLAN termination node 1900 comprising processing circuitry (or logic) 1901. The processing circuitry 1901 controls the operation of the WLAN termination node 1900 and can implement the method described herein in relation to a WLAN termination node 1900. The processing circuitry 1901 can comprise one or more processors, processing units, multi-core processors or modules that are configured or programmed to control the WLAN termination node 1900 in the manner described herein. In particular implementations, the processing circuitry 1901 can comprise a plurality of software and/or hardware modules that are each configured to perform, or are for performing, individual or multiple steps of the method described herein in relation to the WLAN termination node 1900.

Briefly, the processing circuitry 1901 of the WLAN termination node 1900 is configured to cause the WLAN termination node 1900 to: establish a first link with the wireless device, wherein the first link is associated with a first single link address; receive a first request from a base station to establish the multi-link WLAN connection with the wireless device; and transmit a second request to the wireless device to establish at least one second link with the WLAN termination node.

In some embodiments, the WLAN termination node 1900 may optionally comprise a communications interface 1902. The communications interface 1902 of the WLAN termination node 1900 can be for use in communicating with other nodes, such as other virtual nodes. For example, the communications interface 1902 of the WLAN termination node 1900 can be configured to transmit to and/or receive from other nodes requests, resources, information, data, signals, or similar. The processing circuitry 1901 of WLAN termination node 1900 may be configured to control the communications interface 1902 of the WLAN termination node 1900 to transmit to and/or receive from other nodes requests, resources, information, data, signals, or similar.

Optionally, the WLAN termination node 1900 may comprise a memory 1903. In some embodiments, the memory 1903 of the WLAN termination node 1900 can be configured to store program code that can be executed by the processing circuitry 1901 of the WLAN termination node 1900 to perform the method described herein in relation to the WLAN termination node 1900. Alternatively or in addition, the memory 1903 of the WLAN termination node 1900, can be configured to store any requests, resources, information, data, signals, or similar that are described herein. The processing circuitry 1901 of the WLAN termination node 1900 may be configured to control the memory 1903 of the WLAN termination node 1900 to store any requests, resources, information, data, signals, or similar that are described herein.

**Figure 20** illustrates a wireless device 2000 comprising processing circuitry (or logic) 2001. The processing circuitry 2001 controls the operation of the wireless device 2000 and can implement the method described herein in relation to a wireless device 2000. The processing circuitry 2001 can comprise one or more processors, processing units, multi-core processors or modules that are configured or programmed to control the wireless device 2000 in the manner described herein. In particular implementations, the processing circuitry 2001 can comprise a plurality of software and/or hardware modules that are each configured to perform, or are for performing, individual or multiple steps of the method described herein in relation to the wireless device 2000.

Briefly, the processing circuitry 2001 of the wireless device 2000 is configured to cause the wireless device 2000 to: receive, from a base station, a first single link address associated with the WLAN termination node; establish a first link with the WLAN termination node, wherein the first link is associated with the first single link address; and receive a request from the WLAN termination node to establish at least one second link with the WLAN termination node.

In some embodiments, the wireless device 2000 may optionally comprise a communications interface 2002. The communications interface 2002 of the wireless device 2000 can be for use in communicating with other nodes, such as other virtual nodes. For example, the communications interface 2002 of the wireless device 2000 can be configured to transmit to and/or receive from other nodes requests, resources, information, data, signals, or similar. The processing circuitry 2001 of wireless device 2000 may be configured to control the communications interface 2002 of the wireless device 2000 to transmit to and/or receive from other nodes requests, resources, information, data, signals, or similar.

Optionally, the wireless device 2000 may comprise a memory 2003. In some embodiments, the memory 2003 of the wireless device 2000 can be configured to store program code that can be executed by the processing circuitry 2001 of the wireless device 2000 to perform the method described herein in relation to the wireless device 2000. Alternatively or in addition, the memory 2003 of the wireless device 2000, can be configured to store any requests, resources, information, data, signals, or similar that are described herein. The processing circuitry 2001 of the wireless device 2000 may be configured to control the memory 2003 of the wireless device 2000 to store any requests, resources, information, data, signals, or similar that are described herein.

**Figure 21** illustrates a wireless device 2100 comprising processing circuitry (or logic) 2101. The processing circuitry 2101 controls the operation of the wireless device 2100 and can implement the method described herein in relation to a wireless device 2100. The processing circuitry 2101 can comprise one or more processors, processing units, multi-core processors or modules that are configured or programmed to control the wireless device 2100 in the manner described herein. In particular implementations, the processing circuitry 2101 can comprise a plurality of software and/or hardware modules that are each configured to perform, or are for performing, individual or multiple steps of the method described herein in relation to the wireless device 2100.

Briefly, in some examples given for proper understanding the present invention, the processing circuitry 2101 of the wireless device 2100 is configured to cause the wireless device 2100 to: receive a measurement configuration for the plurality of links from the base station; perform measurements of signal strength on the plurality of links; and report the measurements to the base station responsive to a metric associated with the plurality of links combined meeting a predetermined criterion.

In some embodiments, the wireless device 2100 may optionally comprise a communications interface 2102. The communications interface 2102 of the wireless device 2100 can be for use in communicating with other nodes, such as other virtual nodes. For example, the communications interface 2102 of the wireless device 2100 can be configured to transmit to and/or receive from other nodes requests, resources, information, data, signals, or similar. The processing circuitry 2101 of wireless device 2100 may be configured to control the communications interface 2102 of the wireless device 2100 to transmit to and/or receive from other nodes requests, resources, information, data, signals, or similar.

Optionally, the wireless device 2100 may comprise a memory 2103. In some embodiments, the memory 2103 of the wireless device 2100 can be configured to store program code that can be executed by the processing circuitry 2101 of the wireless device 2100 to perform the method described herein in relation to the wireless device 2100. Alternatively or in addition, the memory 2103 of the wireless device 2100, can be configured to store any requests, resources, information, data, signals, or similar that are described herein. The processing circuitry 2101 of the wireless device 2100 may be configured to control the memory 2103 of the wireless device 2100 to store any requests, resources, information, data, signals, or similar that are described herein.

Embodiments described herein therefore allow a cellular network to control establishment of multiple links between a wireless device and a WLAN termination node. The cellular network may then better control the wireless device in order to optimize throughput, battery performance, off-loading, interference situation and propagation conditions. Better service differentiation may be achieved by allocating different types of traffic to its suitable technology or to different links within the same technology.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method in a base station (801) for configuring a multi-link Wireless Local Area Network, WLAN, connection between a wireless device (802) and a first WLAN termination node (803), **characterized in that** the method comprises:
transmitting (601, 901), to the wireless device, a multi-link configuration comprising one or more first addresses, wherein the one or more first addresses comprises one of: a multi-link device address (806) associated with the first WLAN termination node; and a plurality of addresses (804, 805) each associated with a single link to the first WLAN termination node.

2. The method as claimed in claim 1 further comprising:
responsive to the one or more first addresses comprising a multi-link device address associated with the first WLAN termination node, the multi-link configuration comprises a mode associated with the wireless device.

3. The method as claimed in any one of claims 1 to 2 further comprising:
transmitting a bearer configuration to the wireless device to configure a first radio bearer to transmit using a subset of a plurality of links between the wireless device and the first WLAN termination node, wherein the bearer configuration comprises a mapping that maps a traffic identifier associated with the first radio bearer to the subset of the plurality of links between the wireless device and the first WLAN termination node.

4. The method as claimed in any one of claims 1 to 3 wherein the one or more first addresses further comprises at least one address associated with a second WLAN termination node, and wherein the method further comprising transmitting a request from the base station to connect to the first WLAN termination node.

5. The method as claimed in any preceding claim further comprising:
receiving information relating to the first WLAN termination node comprising one or more of: multi-link capability of the first WLAN termination node; bandwidth of each link supported by the first WLAN termination node; a Basic Service Set (BSS) load and/or channel utilization of each link supported by the first WLAN termination node; and a single link address associated with each link supported by the first WLAN termination node; and
determining the multi-link configuration based on the information relating to the first WLAN termination node.

6. A method, in a wireless device (802), for configuring a multi-link Wireless Local Area Network, WLAN, connection between the wireless device and a first WLAN termination node (803), **characterized in that** the method comprises:
receiving (701, 901), from a base station (801), a multi-link configuration comprising one or more first addresses, wherein the one or more first addresses comprises one of: a multi-link device address (806) associated with the first WLAN termination node; and one or more single link addresses (804, 805) each associated with a single link to the first WLAN termination node; and
for each of the one or more first addresses, establishing (702, 903) at least one link with the first WLAN termination node utilizing the first address; and
offloading (703) traffic from a connection to the base station to the at least one link with the first WLAN termination node.

7. The method as claimed in claim 6 further comprises:
responsive to the one or more first addresses comprising a multi-link device address associated with the first WLAN termination node, determining a mode associated with the wireless device; and
establishing a first number of links with the first WLAN termination node, wherein the first number of links is controlled based on the mode,
wherein responsive to the mode comprising one of: a restricted mode, limiting the first number to one; a non-restricted mode, allowing the first number to be limited by a number of available links; a conditioned mode, allowing the first number to be limited by a number of available links responsive to one or more conditions being met.

8. The method as claimed in claim 7 wherein the multi-link configuration comprises an indication of the mode.

9. The method as claimed in any one of claims 6 to 8, further comprising, responsive to receiving a request from the base station, performing one or more of: transmitting data over multiple links, utilizing an access category indicated by the base station, or operating in a low latency mode.

10. The method as claimed in any one of claims 6 to 9 further comprising:
receiving a bearer configuration from the base station to configure a first radio bearer to transmit using a subset of the at least one link, wherein the bearer configuration comprises a mapping that maps a traffic identifier associated with the first radio bearer to the subset of the at least one link.

11. The method as claimed in any one of claims 6 to 10 wherein the one or more first addresses further comprises at least one address associated with a second WLAN termination mode, and wherein the method further comprising:
receiving a request from the base station to connect to the first WLAN termination node.

12. A base station (801, 1600) for configuring a multi-link WLAN connection between a wireless device (802) and a first WLAN termination node (803); the base station comprising a processing circuitry (1601), **characterized in that** the processing circuitry (1601) is configured cause the base station to:
transmit (601, 901), to the wireless device, a multi-link configuration comprising one or more first addresses, wherein the one or more first addresses comprises one of: a multi-link device address associated with the first WLAN termination node; and a plurality of addresses each associated with a single link to the first WLAN termination node.

13. The base station as claimed in claim 12 wherein the processing circuitry is further configured to perform the method as claimed in any one of claims 2 to 5.

14. A wireless device (802, 1700) for configuring a multi-link Wireless Local Area Network, WLAN, connection between the wireless device and a first WLAN termination node (803), the wireless device comprising a processing circuitry (1701), **characterized in that** the processing circuitry (1701) is configured to cause the wireless device to:
receive (701, 901), from a base station, a multi-link configuration comprising one or more first addresses, wherein the one or more first addresses comprises one of: a multi-link device address associated with the first WLAN termination node; and one or more single link addresses each associated with a single link to the first WLAN termination node;
for each of the one or more first addresses, establish (702, 903) at least one link with the first WLAN termination node utilizing the first address; and
offload (703) traffic from a connection to the base station to the at least one link with the first WLAN termination node.

15. The wireless device as claimed in claim 14 wherein the processing circuitry is further configured to perform the method as claimed in any one of claims 7 to 11.

## Patentansprüche

1. Verfahren in einer Basisstation (801) zum Konfigurieren einer Multi-Link-Wireless-Local-Area-Network-Verbindung, WLAN-Verbindung, zwischen einer drahtlosen Vorrichtung (802) und einem ersten WLAN-Abschlussknoten (803), **dadurch gekennzeichnet, dass** das Verfahren Folgendes umfasst:
Übertragen (601, 901), an die drahtlose Vorrichtung, einer Multi-Link-Konfiguration, die eine oder mehrere erste Adressen umfasst, wobei die eine oder mehreren ersten Adressen eines von Folgendem umfassen: eine Multi-Link-Vorrichtungsadresse (806), die dem ersten WLAN-Abschlussknoten zugeordnet ist; und eine Vielzahl von Adressen (804, 805), die jeweils einem Single-Link zum ersten WLAN-Abschlussknoten zugeordnet sind.

2. Verfahren nach Anspruch 1, weiter umfassend:
als Reaktion auf die eine oder mehreren ersten Adressen, die eine dem ersten WLAN-Abschlussknoten zugeordnete Multi-Link-Vorrichtungsadresse umfassen, die Multi-Link-Konfiguration einen der drahtlosen Vorrichtung zugeordneten Modus umfasst.

3. Verfahren nach einem der Ansprüche 1 bis 2, weiter umfassend:
Übertragen einer Trägerkonfiguration an die drahtlose Vorrichtung, um einen ersten Funkträger für die Übertragung unter Verwendung einer Teilmenge einer Vielzahl der Links zwischen der drahtlosen Vorrichtung und dem ersten WLAN-Abschlussknoten zu konfigurieren, wobei die Trägerkonfiguration eine Abbildung umfasst, die eine dem ersten Funkträger zugeordnete Verkehrskennung auf die Teilmenge der Vielzahl von Links zwischen der drahtlosen Vorrichtung und dem ersten WLAN-Abschlussknoten abbildet.

4. Verfahren nach einem der Ansprüche 1 bis 3, wobei die eine oder mehreren ersten Adressen weiter mindestens eine Adresse umfassen, die einem zweiten WLAN-Abschlussknoten zugeordnet ist, und wobei das Verfahren weiter Übertragen einer Anfrage von der Basisstation zur Verbindung mit dem ersten WLAN-Abschlussknoten umfasst.

5. Verfahren nach einem vorstehenden Anspruch, weiter umfassend:
Empfangen von Informationen über den ersten WLAN-Abschlussknoten, umfassend eine oder mehrere von: Multi-Link-Fähigkeit des ersten WLAN-Abschlussknotens; Bandbreite jedes vom ersten WLAN-Abschlussknoten unterstützten Links; eine Basic-Service-Set-Last (BSS-Last) und/oder Kanalnutzung jedes vom ersten WLAN-Abschlussknoten unterstützten Links; und eine Single-Link-Adresse, die jedem vom ersten WLAN-Abschlussknoten unterstützten Link zugeordnet ist; und
Bestimmen der Multi-Link-Konfiguration basierend auf den Informationen über den ersten WLAN-Abschlussknoten.

6. Verfahren, in einer drahtlosen Vorrichtung (802), zum Konfigurieren einer Multi-Link-Wireless-Local-Area-Network-Verbindung, WLAN-Verbindung, zwischen der drahtlosen Vorrichtung und einem ersten WLAN-Abschlussknoten (803), **dadurch gekennzeichnet, dass** das Verfahren Folgendes umfasst:
Empfangen (701, 901), von einer Basisstation (801), einer Multi-Link-Konfiguration, die eine oder mehrere erste Adressen umfasst, wobei die eine oder mehreren ersten Adressen eines von Folgendem umfassen: eine Multi-Link-Vorrichtungsadresse (806), die dem ersten WLAN-Abschlussknoten zugeordnet ist; und eine oder mehrere Single-Link-Adressen (804, 805), die jeweils einem Single-Link zum ersten WLAN-Abschlussknoten zugeordnet sind; und
für jede der einen oder mehreren ersten Adressen, Herstellen (702, 903) mindestens eines Links mit dem ersten WLAN-Abschlussknoten durch Nutzen der ersten Adresse; und
Auslagerung (703) des Datenverkehrs von einer Verbindung zur Basisstation auf den mindestens einen Link mit dem ersten WLAN-Abschlussknoten.

7. Verfahren nach Anspruch 6, weiter umfassend:
als Reaktion auf die eine oder mehreren ersten Adressen, die eine dem ersten WLAN-Abschlussknoten zugeordnete Multi-Link-Vorrichtungsadresse umfassen, Bestimmen eines der drahtlosen Vorrichtung zugeordneten Modus; und
Herstellen einer ersten Anzahl von Links mit dem ersten WLAN-Abschlussknoten, wobei die erste Anzahl von Links basierend auf dem Modus gesteuert wird,
wobei als Reaktion darauf, dass der Modus eines von Folgendem umfasst: einen eingeschränkten Modus, der die erste Anzahl auf eins begrenzt; einen nichteingeschränkten Modus, der der ersten Anzahl ermöglicht, durch eine Anzahl verfügbarer Links begrenzt zu werden; einen bedingten Modus, der der ersten Anzahl ermöglicht, durch eine Anzahl verfügbarer Links begrenzt zu werden, als Reaktion darauf, dass eine oder mehrere Bedingungen erfüllt sind.

8. Verfahren nach Anspruch 7, wobei die Multi-Link-Konfiguration eine Angabe des Modus umfasst.

9. Verfahren nach einem der Ansprüche 6 bis 8, weiter umfassend, als Reaktion auf den Empfang einer Anfrage von der Basisstation, Durchführen einer oder mehrerer von Folgendem: Datenübertragung über mehrere Links, Nutzung einer von der Basisstation angegebenen Zugriffskategorie oder Betrieb in einem Modus mit niedriger Latenz.

10. Verfahren nach einem der Ansprüche 6 bis 9, weiter umfassend:
Empfangen einer Trägerkonfiguration von der Basisstation, um einen ersten Funkträger für die Übertragung unter Verwendung einer Teilmenge des mindestens einen Links, wobei die Trägerkonfiguration eine Abbildung umfasst, die eine dem ersten Funkträger zugeordnete Verkehrskennung auf die Teilmenge des mindestens einen Links abbildet.

11. Verfahren nach einem der Ansprüche 6 bis 10, wobei die eine oder mehreren ersten Adressen weiter mindestens eine Adresse umfassen, die einem zweiten WLAN-Abschlussknoten zugeordnet ist, und wobei das Verfahren weiter Folgendes umfasst:
Empfangen einer Anfrage von der Basisstation zur Verbindung mit dem ersten WLAN-Abschlussknoten.

12. Basisstation (801, 1600) zum Konfigurieren einer Multi-Link-WLAN-Verbindung zwischen einer drahtlosen Vorrichtung (802) und einem ersten WLAN-Abschlussknoten (803); wobei die Basisstation eine Verarbeitungsschaltung (1601) umfasst, **dadurch gekennzeichnet, dass** die Verarbeitungsschaltung (1601) konfiguriert ist, die Basisstation zu Folgendem zu veranlassen:
Übertragen (601, 901), an die drahtlose Vorrichtung, einer Multi-Link-Konfiguration, die eine oder mehrere erste Adressen umfasst, wobei die eine oder mehreren ersten Adressen eines von Folgendem umfassen: eine Multi-Link-Vorrichtungsadresse, die dem ersten WLAN-Abschlussknoten zugeordnet ist; und eine Vielzahl von Adressen, die jeweils einem Single-Link zum ersten WLAN-Abschlussknoten zugeordnet sind.

13. Basisstation nach Anspruch 12, wobei die Verarbeitungsschaltung weiter konfiguriert ist, das Verfahren nach einem der Ansprüche 2 bis 5 durchzuführen.

14. Drahtlose Vorrichtung (802, 1700) zum Konfigurieren einer Multi-Link-Wireless-Local-Area-Network-Verbindung, WLAN-Verbindung, zwischen der drahtlosen Vorrichtung und einem ersten WLAN-Abschlussknoten (803), wobei die drahtlose Vorrichtung eine Verarbeitungsschaltung (1701) umfasst, **dadurch gekennzeichnet, dass** die Verarbeitungsschaltung (1701) konfiguriert ist, dass die drahtlose Vorrichtung zu Folgendem zu veranlassen:
Empfangen (701, 901), von einer Basisstation, einer Multi-Link-Konfiguration, die eine oder mehrere erste Adressen umfasst, wobei die eine oder mehreren ersten Adressen eines von Folgendem umfassen: eine Multi-Link-Vorrichtungsadresse, die dem ersten WLAN-Abschlussknoten zugeordnet ist; und eine oder mehrere Single-Link-Adressen, die jeweils einem Single-Link zum ersten WLAN-Abschlussknoten zugeordnet sind;
für jede der einen oder mehreren ersten Adressen, Herstellen (702, 903) mindestens eines Links mit dem ersten WLAN-Abschlussknoten durch Nutzen der ersten Adresse; und
Auslagerung (703) des Datenverkehrs von einer Verbindung zur Basisstation auf den mindestens einen Link mit dem ersten WLAN-Abschlussknoten.

15. Drahtlose Vorrichtung nach Anspruch 14, wobei die Verarbeitungsschaltung weiter konfiguriert ist, das Verfahren nach einem der Ansprüche 7 bis 11 durchzuführen.

## Revendications

1. Procédé dans une station de base (801) pour configurer une connexion de réseau local sans fil (WLAN) à liaisons multiples entre un dispositif sans fil (802) et un premier nœud de terminaison WLAN (803), **caractérisé en ce que** le procédé comprend :
la transmission (601, 901), au dispositif sans fil, d'une configuration à liaisons multiples comprenant une ou plusieurs premières adresses, dans lequel les une ou plusieurs premières adresses comprennent une parmi : une adresse de dispositif à liaisons multiples (806) associée au premier nœud de terminaison WLAN ; et une pluralité d'adresses (804, 805) associées chacune avec une liaison unique au premier nœud de terminaison WLAN.

2. Procédé selon la revendication 1, comprenant en outre :
en réponse à la une ou plusieurs premières adresses comprenant une adresse de dispositif à liaison multiple associée au premier nœud de terminaison WLAN, la configuration à liaisons multiples comprenant un mode associé au dispositif sans fil.

3. Procédé selon l'une quelconque des revendications 1 à 2, comprenant en outre :
la transmission d'une configuration de porteuse au dispositif sans fil afin de configurer une première porteuse radio pour transmettre en utilisant un sous-ensemble d'une pluralité de liaisons entre le dispositif sans fil et le premier nœud de terminaison WLAN, dans lequel la configuration de porteuse comprenant une cartographie qui cartographie un identifiant de trafic associé à la première porteuse radio par rapport au sous-ensemble de la pluralité de liaisons entre le dispositif sans fil et le premier nœud de terminaison WLAN.

4. Procédé selon l'une quelconque des revendications 1 à 3, dans lequel les une ou plusieurs premières adresses comprennent en outre au moins une adresse associée à un second nœud de terminaison WLAN, et dans lequel le procédé comprend en outre une transmission d'une requête de la station de base pour une connexion au premier nœud de terminaison WLAN.

5. Procédé selon une quelconque revendication précédente, comprenant en outre :
la réception d'informations relatives au premier nœud de terminaison WLAN, comprenant une ou plusieurs parmi : une capacité de liaisons multiples du premier nœud de terminaison WLAN ; bande passante de chaque liaison prise en charge par le premier nœud de terminaison WLAN ; une charge d'ensemble de services de base (BSS) et/ou une utilisation de canal de chaque liaison prise en charge par le premier nœud de terminaison WLAN ; et une adresse de liaison unique associée à chaque liaison prise en charge par le premier nœud de terminaison WLAN ; et
déterminer la configuration de liaisons multiples sur la base des informations relatives au premier nœud de terminaison WLAN.

6. Procédé, dans un dispositif sans fil (802), de configuration d'une connexion de réseau local sans fil (WLAN) à liaisons multiples entre le dispositif sans fil et un premier nœud de terminaison WLAN (803), **caractérisé en ce que** le procédé comprend :
la réception (701, 901), à partir d'une station de base (801), d'une configuration de liaisons multiples comprenant une ou plusieurs premières adresses, dans lequel les une ou plusieurs premières adresses comprennent une ou plusieurs parmi : une adresse de dispositif à liaison multiples (806) associée au premier nœud de terminaison WLAN ; et une ou plusieurs adresses de liaison unique (804, 805) associées chacune à une liaison unique vers le premier nœud de terminaison WLAN ; et
pour chacune des une ou plusieurs premières adresses, l'établissement (702, 903) d'au moins une liaison avec le premier nœud de terminaison WLAN en utilisant la première adresse ; et
le déchargement (703) du trafic à partir d'une connexion à la station de base vers la au moins une liaison avec le premier nœud de terminaison WLAN.

7. Procédé selon la revendication 6, comprend en outre :
en réponse à la une ou plusieurs premières adresses comprenant une adresse de dispositif à liaison multiple associée au premier nœud de terminaison WLAN, la détermination d'un mode associé au dispositif sans fil ; et
l'établissement d'un premier nombre de liaisons avec le premier nœud de terminaison WLAN, dans lequel le premier nombre de liaisons est commandé sur la base du mode,
dans lequel en réponse au mode comprenant un parmi : un mode restreint, limitant le premier nombre à un ; un mode non restreint, permettant de limiter le premier nombre par un nombre de liaisons disponibles ; un mode conditionnel, permettant de limiter le premier nombre par un nombre de liaisons disponibles en réponse à la satisfaction d'une ou plusieurs conditions.

8. Procédé selon la revendication 7, dans lequel la configuration à liaisons multiples comprend une indication du mode.

9. Procédé selon l'une quelconque des revendications 6 à 8, comprenant en outre, en réponse à la réception d'une requête en provenance de la station de base, l'exécution d'une ou plusieurs des étapes suivantes : transmission de données sur de multiples liaisons, utilisation d'une catégorie d'accès indiquée par la station de base ou fonctionnement en mode à faible latence.

10. Procédé selon l'une quelconque des revendications 6 à 9, comprend en outre :
la réception d'une configuration de porteuse en provenance de la station de base pour configurer une première porteuse radio afin de transmettre en utilisant un sous-ensemble de la au moins une liaison, dans lequel la configuration de porteuse comprend une cartographie qui cartographie un identifiant de trafic associé à la première porteuse radio par rapport au sous-ensemble de la au moins une liaison.

11. Procédé selon l'une quelconque des revendications 6 à 10, dans lequel les une ou plusieurs premières adresses comprennent en outre au moins une adresse associée à un second mode de terminaison WLAN, et dans lequel le procédé comprend en outre :
la réception d'une requête en provenance de la station de base pour une connexion au premier nœud de terminaison WLAN.

12. Station de base (801, 1600) pour configurer une connexion WLAN à liaisons multiples entre un dispositif sans fil (802) et un premier nœud de terminaison WLAN (803) ; la station de base comprenant des circuits de traitement (1601), **caractérisé en ce que** les circuits de traitement (1601) sont configurés pour amener la station de base à :
transmettre (601, 901), au dispositif sans fil, une configuration à liaisons multiples comprenant une ou plusieurs premières adresses, dans lequel les une ou plusieurs premières adresses comprennent une parmi : une adresse de dispositif à liaisons multiples associée au premier nœud de terminaison WLAN ; et une pluralité d'adresses associées chacune avec une liaison unique au premier nœud de terminaison WLAN.

13. Station de base selon la revendication 12, dans laquelle les circuits de traitement sont en outre configurés pour exécuter le procédé selon l'une quelconque des revendications 2 à 5.

14. Dispositif sans fil (802, 1700) pour configurer une connexion de réseau local sans fil (WLAN) à liaisons multiples entre le dispositif sans fil et un premier nœud de terminaison WLAN (803), le dispositif sans fil comprenant des circuits de traitement (1701), **caractérisé en ce que** les circuits de traitement (1701) sont configurés pour amener le dispositif sans fil à :
recevoir (701, 901), à partir d'une station de base, une configuration de liaisons multiples comprenant une ou plusieurs premières adresses, dans lequel les une ou plusieurs premières adresses comprennent une ou plusieurs parmi : une adresse de dispositif à liaison multiples associée au premier nœud de terminaison WLAN ; et une ou plusieurs adresses de liaison unique associées chacune à une liaison unique vers le premier nœud de terminaison WLAN ;
pour chacune des une ou plusieurs premières adresses, établir (702, 903) au moins une liaison avec le premier nœud de terminaison WLAN en utilisant la première adresse ; et
décharger (703) le trafic à partir d'une connexion à la station de base vers la au moins une liaison avec le premier nœud de terminaison WLAN.

15. Dispositif sans fil selon la revendication 14, dans lequel les circuits de traitement sont en outre configurés pour exécuter le procédé selon l'une quelconque des revendications 7 à 11.
